# EUROPÄISCHE PATENTSCHRIFT

(11) **EP 2 733 459 B1**
(45) Veröffentlichungstag und Bekanntmachung des Hinweises auf die Patenterteilung: **10.07.2019**
(21) Anmeldenummer: 13188797.8
(22) Anmeldetag: 16.10.2013
(51) Int. Cl.: G01B 11/27

(54) **Vorrichtung und Verfahren zum Ermitteln der Lage zweier gekuppelter Wellen zueinander**
Device and method for determining the relative position of two coupled shafts to each other
Dispositif et procédé de détermination de la position relative de deux arbres couplés

(30) Priorität: 19.11.2012 DE 102012022487
(43) Veröffentlichungstag der Anmeldung: 21.05.2014
(73) Patentinhaber: Prüftechnik Dieter Busch AG, 85737 Ismaning (DE)
(72) Erfinder: Canu, Gianluca, 81929 München (DE); Glaser, Bernhard, 85737 Ismaning (DE); Konetschny, Volker, 81241 München (DE); Wegener, Martin, 85551 Kirchheim (DE)

(56) Entgegenhaltungen:
- EP-A2- 0 896 203
- US-B1- 6 434 849
- US-B1- 6 873 931

## Beschreibung

Die Erfindung betrifft eine Vorrichtung und ein Verfahren zum Ermitteln der Lage einer ersten Welle und einer mittels einer Kupplung mit der ersten Welle verbundenen zweiten Welle zueinander, wobei eine erste Messeinheit an einer Umfangsfläche der ersten Welle und eine zweite Messeinheit an einer Umfangsfläche der zweiten Welle angesetzt wird. Dabei weist mindestens eine der beiden Messeinheiten Mittel zum Erzeugen mindestens eines Lichtstrahlbündels auf, und mindestens eine der beiden Messeinheiten weist Detektionsmittel auf, um Daten betreffend die Auftreffposition des Lichtstrahlbündels auf mindestens einer Detektionsfläche zu erfassen. Ferner ist mindestens eine der beiden Messeinheiten mit mindestens einem Sensor zum Erfassen des Drehwinkels der Welle versehen. Mittels einer Auswerteeinheit kann aus den in mehreren Messpositionen, d.h. in mehreren Drehwinkelpositionen, ermittelten Auftreffpositionen des Lichtstrahlbündels der Parallelversatz sowie der horizontale bzw. vertikale Winkelversatz der beiden Wellen ermittelt werden, wobei dies typischerweise durch Kurvenanpassung erfolgt.

Eine Übersicht über solche Wellenausrichtungsmessvorrichtungen ist beispielsweise in der US 6,434,849 B1 zu finden, wobei auch eine Datenauswertung mittels Kurvenanpassung an eine Ellipse beschrieben ist.

In der DE 33 20 163 A1 und der DE 39 11 307 A1 sind WellenausrichtungsMessvorrichtungen beschrieben, bei welchen die erste Messeinheit einen Lichtstrahl aussendet, der von einem Spiegelprisma der zweiten Messeinheit auf einen zweiachsigen optischen Detektor der ersten Messeinheit zurückreflektiert wird.

Aus der DE 38 14 466 A1 ist eine Wellenausrichtungs-Messvorrichtung bekannt, bei welcher die erste Messeinheit einen Lichtstrahl aussendet, der auf zwei in axialer Richtung optisch hintereinander angeordnete zweiachsige optische Detektoren der zweiten Messeinheit fällt.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen zweiachsigen optischen Detektor aufweisen, wobei der Lichtstrahl jeweils auf den Detektor der anderen Messeinheit gerichtet wird. Eine nach diesem Prinzip arbeitende Wellenausrichtungs-Messvorrichtung ist auch in der US 6,873,931 B1 beschrieben, wobei die beiden Messeinheiten jeweils mit zwei zweiachsigen Beschleunigunsgsensoren zur automatischen Erfassung des Drehwinkels der Welle versehen sind.

In der EP 2 093 537 A1 ist eine Messvorrichtung beschrieben, bei welcher die erste Messeinheit einen aufgefächerten Lichtstrahl aussendet, der auf zwei seitlich in Abstand zueinander parallel angeordnete optische Streifendetektoren der zweiten Messeinheit fällt, wobei die Längsrichtung der Detektoren senkrecht zu der Fächerebene des Lichtstrahls angeordnet ist, wobei nicht nur die Bestimmung der Ausrichtung der Wellen zueinander sondern auch die Bestimmung des Kupplungsspiels beschrieben ist.

Aus der WO 2010/042039 A1 ist eine Wellenausrichtungsmessvorrichtung bekannt, bei welcher jede der beiden Messeinheiten mit einer in einem Gehäuse angeordneten Kamera versehen ist, wobei die der anderen Einheit zugewandte Gehäuseseite mit einem optischen Muster versehen ist, welches von der gegenüberliegende Kamera aufgenommen wird. Die mit dem Muster versehene Gehäuseseite ist dabei jeweils mit einer Öffnung versehen, durch welche das gegenüberliegende Muster abgebildet wird. Bei einer alternativen Ausführung ist eine der beiden Einheiten nur mit einer Kamera, nicht aber mit einem Muster versehen, während die andere Einheit keine Kamera aufweist, jedoch mit einem dreidimensionalen Muster versehen ist.

In der EP 1 211 480 A2 ist eine Wellenausrichtungsmessvorrichtung beschrieben, bei welcher die erste Messeinheit mit einer Lichtquelle versehen ist, welche einen Lichtstrahl auf die mit einer Mattscheibe versehenen zweiten Messeinheit richtet; die der ersten Messeinheit abgewandte Seite der Mattscheibe wird mittels einer entsprechenden Optik auf einen ebenfalls Teil der zweiten Messeinheit bildenden Bilddetektor abgebildet.

In der US 6,981,333 B2 ist beschrieben, wie bei einer Ausrichtungsmessung von Wellen mittels gyroskopischen Sensoren während der Messung auftretende Schwingungen bestimmt werden, um Verfälschungen der Ausrichtungsmessung aufgrund solcher Schwingungen möglichst zu vermeiden.

In der US 5,980,094 ist ein Wellenausrichtungsmessverfahren beschrieben, bei welchem wie in der DE 33 35 336 A1 beide Messeinheiten einen Lichtstrahl auf einen zweiachsigen optischen Detektor der jeweils anderen Messeinheit richten, wobei zur Auswertung der Daten für jeden der beiden Detektoren die radiale Komponente des Auftreffpunkts des Lichtstrahls als Funktion des Drehwinkels aufgetragen wird und jeweils eine Sinuskurve an die Messdaten angepasst wird. Dabei wird für den ermittelten und ausgewerteten Datensatz ein Vertrauensfaktor basierend auf der Anzahl der Messpunkte und der Winkelverteilung der Messpunkte ermittelt. Ferner wird dabei vorgeschlagen, aus dem ermittelten Datensatz verdächtige Datenpunkte manuell oder automatisch zu entfernen, wobei dann auf der Basis des so reduzierten Datensatzes eine neue Kurvenanpassung vorgenommen wird und überprüft wird, ob sich der Vertrauensfaktor durch die Reduktion des Datensatzes erhöht hat. Es wird allerdings nicht erwähnt, wie die verdächtigen Datenpunkte identifiziert werden können, außer dadurch, dass sich durch das Entfernen dieser verdächtigen Datenpunkte der Vertrauensfaktor erhöht. Ein ähnliches Wellenausrichtungsverfahren ist in der US 5,263,261 beschrieben.

Es ist Aufgabe der vorliegenden Erfindung, eine Wellenausrichtungsmessvorrichtung und ein Wellenausrichtungsmessverfahren zu schaffen, wodurch eine besonders einfache und zuverlässige Messung ermöglicht wird.

Diese Aufgabe wird erfindungsgemäß gelöst durch eine Vorrichtung gemäß Anspruch 1 bzw. ein Verfahren gemäß Anspruch 29.

Bei der erfindungsgemäßen Lösung ist vorteilhaft, dass dadurch, dass für jede einzelne Messposition eine Qualitätsbewertung der zugehörigen Daten anhand der Winkelgeschwindigkeit und Winkelbeschleunigung, Differenz der tangentialen Komponente der Auftreffposition zur Auftreffposition der vorhergehenden Messposition, bezogen auf den zeitlichen Abstand zur vorhergehenden Messposition, und dem Grad der Abweichung der Auftreffposition von einer an mindestens einem Teil der ermittelten Auftreffposition angepassten Kurve vorgenommen wird und die Daten einer Messposition von der Berücksichtigung bei der Ermittlung des Wellenversatzes ausgeschlossen werden, falls die Qualitätsbewertung dieser Daten unterhalb eines Schwellwerts liegt, zuverlässige Messdaten auf einfache Weise ermittelt und gegebenenfalls eliminiert werden können, um die Zuverlässigkeit des ermittelten Wellenversatzes zu erhöhen.

Bevorzugte Ausgestaltungen der Erfindung ergeben sich aus den abhängigen Ansprüchen.

Im Folgenden werden Beispiele der Erfindung anhand der beigefügten Zeichnungen näher erläutert, wobei:
- Fig. 1: eine schematische seitliche Ansicht einer erfindungsgemäßen Wellenausrichtungsvorrichtung gemäß einem ersten Beispiel;
- Fig. 2: eine perspektivische schematische Ansicht eines Beispiels einer Messeinheit mit zwei optischen Detektoren, die bei der Vorrichtung gemäß Fig. 1 verwendet werden können;
- Fig. 3A und 3B: eine schematische Veranschaulichung der Auftreffpositionen des Lichtstrahls bei einer Vorrichtung gemäß Fig. 1 bei Parallelversatz bzw. vertikalem Winkelversatz der beiden Wellen;
- Fig. 4: eine Veranschaulichung der Auftreffpositionen des Lichtstrahls der Vorrichtung von Fig. 1 bei einem vollen Umlauf der Wellen während der Messung bei einer relativ zuverlässigen Messung;
- Fig. 5: eine Ansicht wie Fig. 4, wobei eine weniger zuverlässige Messung dargestellt ist;
- Fig. 6: eine Ansicht wie Fig. 4, wobei die Messung nur über einen Teil einer vollen Umdrehung der Wellen ausgeführt wird;
- Fig. 7: eine Veranschaulichung der Auswertung der bei einer Messung gemäß Fig. 4 bis 6 ermittelten Kurve;
- Fig. 8A und 8B: ein praktisches Beispiel von Messpunkten in der Art von Fig. 4 bis 7, wobei die Messpunkte mit angepasster Kurve gezeigt sind (Fig. 8A); in Fig. 8B ist die prozentuale Abweichung jedes Messpunkts von der angepassten Kurve in Fig. 8A als Funktion des Drehwinkels gezeigt;
- Fig. 9A und 9B: eine Ansicht wie Fig. 8A bzw. 8B, wobei ein anderes Beispiel dargestellt ist;
- Fig. 10: eine Ansicht wie Fig. 1, wobei ein alternatives Messverfahren schematisch veranschaulicht ist; und
- Fig. 11: eine Ansicht wie Fig. 1, wobei ein weiteres alternatives Messverfahren schematisch veranschaulicht ist.

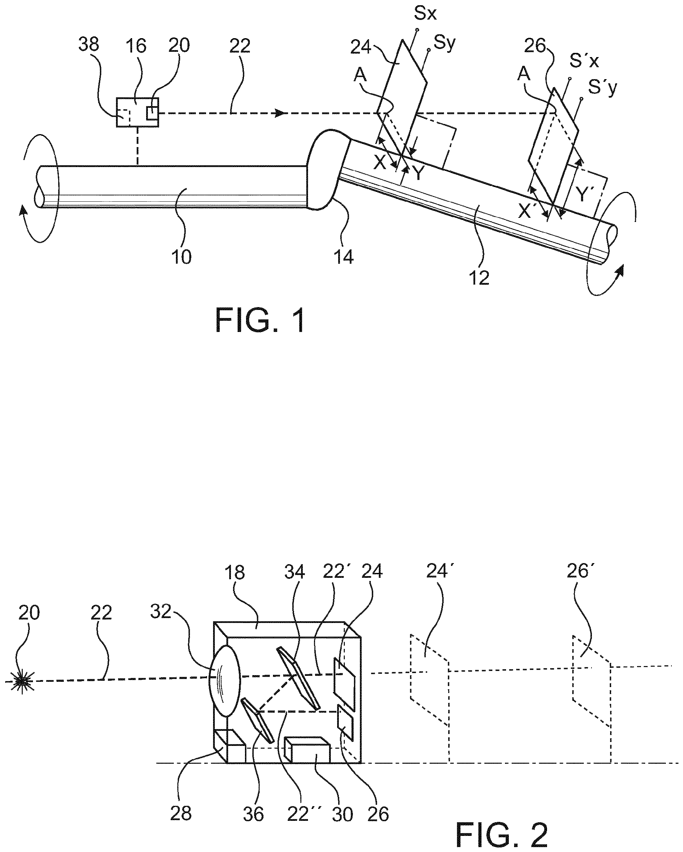

In Fig. 1 ist eine Vorrichtung schematisch gezeigt, mittels welcher die Ausrichtung einer ersten Welle 10 bezüglich einer zweiten Welle 12, die mittels einer Kupplung 14 mit der ersten Welle verbunden ist, bestimmt werden kann. Die beiden Wellen 10, 12 sind fluchtend hintereinander angeordnet. Die Vorrichtung umfasst eine erste Messeinheit 16, die an eine Umfangsfläche der ersten Welle 10 fest ansetzbar ist, und eine zweite Messeinheit 18, die an eine Umfangsfläche der zweiten Welle 12 fest ansetzbar ist. Die erste Messeinheit 16 weist eine Laserlichtquelle 20 zum Erzeugen eines Lichtstrahls bzw. Lichtstrahlbündels 22 auf, der auf die zweite Messeinheit 18 gerichtet ist. Die zweite Messeinheit 18 weist zwei optisch in axialer Richtung versetzt hintereinander angeordnete Detektionsflächen 24 und 26 auf, die typischerweise jeweils von einem zweiachsigen optischen Detektor gebildet werden. Zur Ermittlung des Versatzes der beiden Wellen 10 und 12 relativ zueinander werden die Wellen um ihre Achse gemeinsam gedreht (wobei in der Regel nur eine der beiden Wellen angetrieben wird); dabei werden in mehreren Messpositionen, die jeweils einer bestimmten Drehwinkelposition entsprechen, die Auftreffpositionen des Lichtstrahls 22 auf den beiden Detektorflächen 24 und 26 erfasst. Im gezeigten Beispiel ist die radiale Komponente mit Y bzw. Y' und die tangentiale Komponente mit X bzw. X' bezeichnet.

Ferner weist die zweite Messeinheit 18 mindestens einen Sensor 28 auf, der geeignet ist, den Drehwinkel der zweiten Messeinheit 18 - und damit den Drehwinkel der Wellen 10 und 12 - sowie die Winkelgeschwindigkeit und Winkelbeschleunigung zu erfassen. Dabei handelt es sich vorzugsweise um mindestens ein zweiachsiges Akzelerometer oder mindestens ein Gyroskop, wobei in beiden Fällen der Sensor vorzugsweise als MEMS-Baustein ausgebildet ist. Eine genaue Drehwinkelermittlung mittels zweier zweiachsiger Akzelerometersensoren ist beispielsweise in der US 6,873,931 B1 beschrieben. Ferner weist die zweite Messeinheit 18 eine Auswerteeinheit 30 auf, welche mit den Daten des Sensors 28 und den Daten der optischen Sensoren 24 und 26 versorgt wird, um diese auszuwerten und schließlich den Wellenversatz zu ermitteln.

Ein Beispiel dafür, wie mittels welchem die hintereinander angeordneten optischen Detektionsflächen realisiert werden kann, ist in Fig. 2 gezeigt, wobei dieses Prinzip im Detail in der DE 38 14 466 A1 beschrieben ist. Dabei ist die zweite Messeinheit 18 mit einer Linse 32, einem Strahlteiler 34 sowie einem Spiegel 36 versehen, wobei der Strahl 22 durch die Linse 32 einfällt und auf den Strahlteiler 34 gelangt, wobei ein Teil des Strahls 22 als Strahl 22' transmittiert wird und auf den ersten Detektor 24 auftrifft, während ein Teil 22" des Strahls 22 vom Strahlteiler 34 auf einen Spiegel 36 und von dort auf den zweiten Detektor 26 reflektiert wird. Im gezeigten Beispiel sind dabei die beiden Detektorflächen 24 und 26 räumlich nicht axial sondern radial (oder tangential) zueinander versetzt, während die zweite Detektorfläche 26 optisch (bzw. virtuell) aufgrund der Wirkung des Strahlteilers 34 und des Spiegels 36 axial versetzt hinter der Detektorfläche 24 angeordnet ist (d.h. die Auftreffpunkte der Teilstrahlen 22', 22" sind so, als ob die beiden Detektorflächen 24 und 26 axial hintereinander angeordnet werden).

Um die Auftreffposition des Lichtstrahls 22 auf der ersten Detektorfläche 24 bzw. der zweiten Detektorfläche 26 zu ermitteln, kann beispielsweise eine Schwerpunktberechnung vorgenommen werden, falls sich der Lichtfleck über mehrere Detektorpixel erstreckt. Eine solche Ermittlung der Auftreffposition kann entweder bereits im Detektor selbst oder in der Auswerteeinheit 30 implementiert sein.

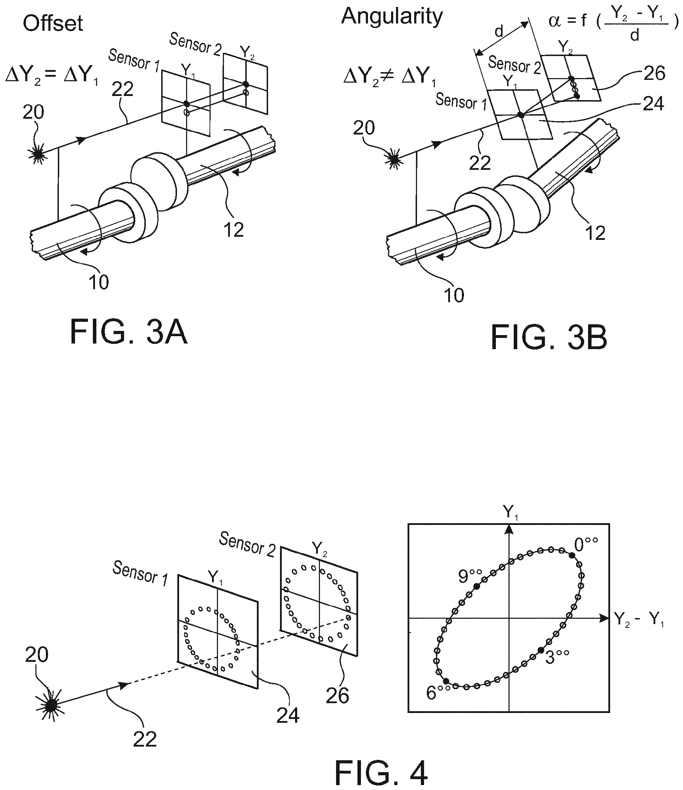

In den Fig. 3A und 3B ist schematisch die Auswirkung eines vertikalen Parallelversatzes bzw. eines vertikalen Winkelversatzes der Wellen 10 und 12 zueinander hinsichtlich der Auftreffposition auf dem ersten Detektor 24 und dem zweiten Detektor 26 veranschaulicht, wobei jeweils das Wandern der Auftreffpositionen während einer Umdrehung der Wellen 10, 12 gezeigt ist.

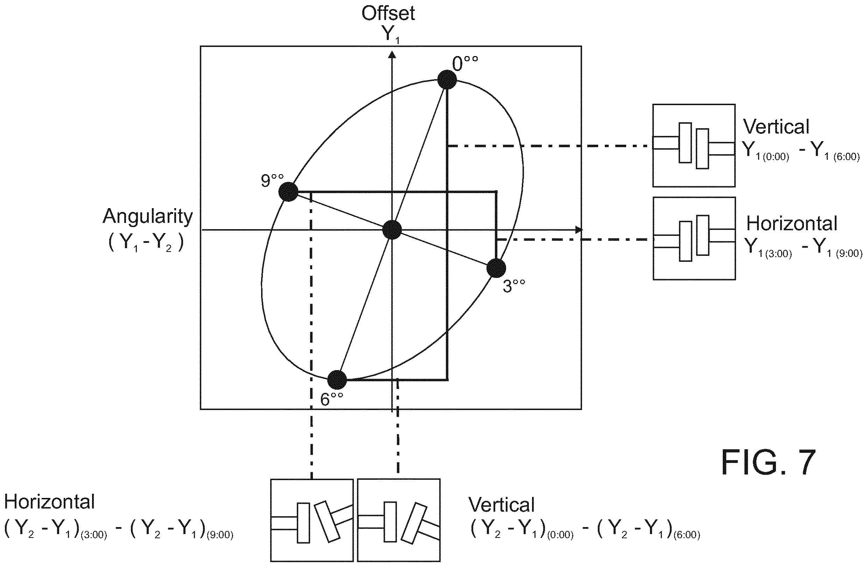

In Fig. 4 ist das Wandern der Auftreffpositionen während einer Wellenumdrehung für den allgemeinen Fall dargestellt, d.h. wenn sowohl ein Parallelversatz als auch ein vertikaler und ein horizontaler Winkelversatz vorliegt. Dabei ergibt sich auf beiden Detektorflächen jeweils ein Kreis. Zur Ermittlung des Wellenversatzes werden die Daten bezüglich der Auftreffpositionen üblicherweise so aufgetragen, dass in der einen Richtung die radiale Komponente der Auftreffposition auf der näher bei der Lichtquelle liegenden Detektorfläche 24 (im Beispiel mit Y1 bezeichnet) aufgetragen, während in die andere Richtung die Differenz der radialen Komponenten der Auftreffpositionen auf der ersten Sensorfläche 24 und der zweiten Sensorfläche 26 aufgetragen wird (im Beispiel mit "Y1 - Y2" bezeichnet). Im allgemeinen und idealen Fall liegen die so aufgetragenen Messpunkte auf einer Ellipse, die mit dem Wellendrehwinkel parametrisiert ist. Im in Fig. 4 gezeigten Beispiel entsprechen die Scheitelpunkte der Ellipse dabei den Null-Uhr-, Sechs-Uhr-, Drei-Uhr- bzw. Neun-Uhr-Positionen der Messeinheiten im Laufe eines Umlaufs der Wellen (im allgemeinen Fall fallen diese Positionen jedoch nicht mit den Scheiteln der Ellipse zusammen). Die Parameter der gesuchten Ellipse werden üblicherweise mittels Kurvenanpassung an die Messpunkte ermittelt. Aus der Form der so ermittelten Ellipse können dann der Parallelversatz, der vertikale Winkelversatz und der horizontale Winkelversatz der Wellen ermittelt werden, wie dies in Fig. 7 angedeutet ist. In diesem Zusammenhang sei beispielhaft auf die DE 39 11 307 A1 verwiesen.

In der Praxis liegen die Messpunkte jedoch nicht genau auf einer Ellipsenkurve, da verschiedene Messfehler zu einer entsprechenden Abweichung führen können. Ein in diesem Zusammenhang auftretendes Problem liegt beispielsweise in dem grundsätzlich immer in mehr oder weniger großem Umfang vorhandenen Spiel der Kupplung 14 begründet, was dazu führt, dass die beiden Wellen 10, 12 bei der Rotation nicht starr gekoppelt sind, so dass beispielsweise, wenn die Welle 10 angetrieben wird, die Welle 12 zu Beginn der Drehbewegung sich noch gar nicht bzw. langsamer als die Welle 10 dreht. Dies führt dann zu einer Verstellung der Messeinheiten 16, 18 in tangentialer Richtung relativ zueinander, was auch die radiale Komponente der Auftreffpunkte des Lichtstrahls 22 auf den Detektorflächen 24, 26 beeinflusst. Auch kann beispielsweise eine starke Winkelbeschleunigung aufgrund der Elastizität bzw. Trägheit der Messeinheiten 16, 18 zu einer tangentialen Verstellung zwischen Welle und zugehöriger Messeinheit sowie zu einer relativen Verdrehung zwischen den beiden Wellen führen. Auch eine nicht optimale, d.h. ganz starre, Verbindung zwischen der jeweiligen Messeinheit und der Welle kann zu Abweichungen der Auftreffpositionen führen.

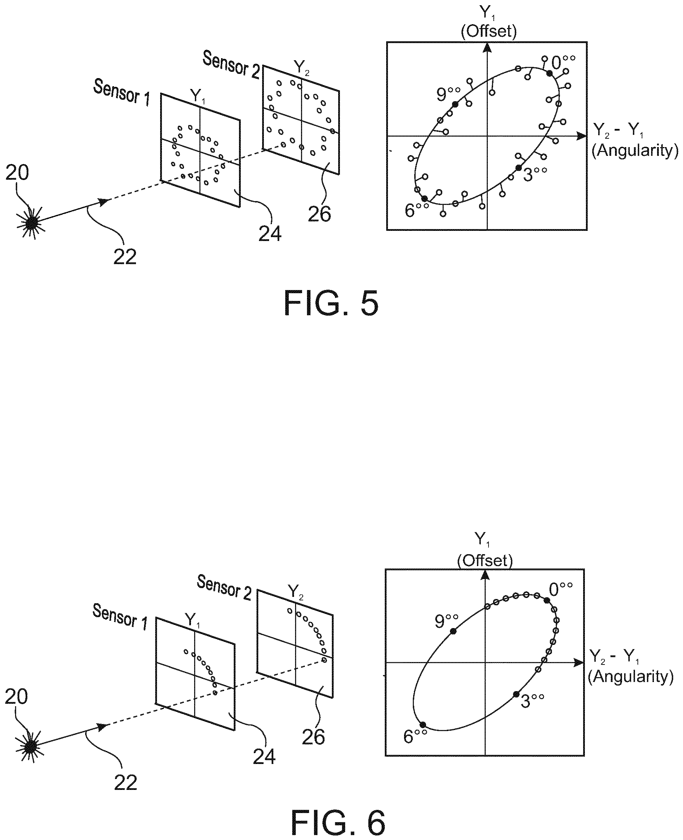

In Fig. 5 ist ein Beispiel für eine nicht ideale Messung gezeigt, wobei die einzelnen Messpunkte teilweise erheblich von der an die Messpunkte angepassten Ellipse abweichen.

In der Regel wird das Ergebnis der Kurvenanpassung - und damit die Ermittlung des Wellenversatzes - um so unzuverlässiger sein, je größer die Standardabweichung der Messpunkte von der angepassten Ellipse ist.

Die Zuverlässigkeit der Kurvenanpassung kann erhöht werden, indem eine Qualitätsbewertung der einzelnen Messpunkte anhand bestimmter Kriterien vorgenommen wird und Messpunkte mit schlechter Qualitätsbewertung gar nicht oder mit nur geringer Gewichtung bei der Auswertung, d.h. bei der Kurvenanpassung, berücksichtigt werden. Bei der Qualitätsbewertung der einzelnen Messpunkte (die jeweils einer bestimmten Messposition entsprechen) können folgende Kriterien herangezogen werden: Winkelgeschwindigkeit und Winkelbeschleunigung, Differenz der tangentialen Komponente der Auftreffposition bzw. Auftreffpositionen zur tangentialen Komponente der Auftreffposition bzw. Auftreffpositionen der vorhergehenden Messposition, bezogen auf den zeitlichen Abstand zur vorhergehenden Messposition; Grad der Abweichung der Auftreffposition bzw. des Messpunkts von einer an mindestens einem Teil der ermittelten Messpunkte angepassten Kurve, Schwingungsintensität während der Messung, Änderung der Winkelbeschleunigung; zeitlicher Abstand der Messposition zu einem Referenzzeitpunkt der Drehbewegung, wobei es sich bei dem Referenzzeitpunkt beispielsweise um den Beginn der Drehbewegung handeln kann; zu einer Erfassung der Schwingungsintensität ist vorzugsweise der zur Drehwinkelerfassung vorgesehene Sensor 28 entsprechend ausgebildet; insbesondere ein Akzelerometersensor ist dabei besonders gut geeignet. Je höher die Schwingungsintensität eines Messpunkts ist, desto schlechter wird dieser bewertet.

Ein Messpunkt kann ferner um so schlechter bewertet werden, je näher er am Beginn der Drehbewegung liegt, da beim Anfahren der Wellen 10, 12 das Kupplungsspiel beispielsweise eine besonders große Rolle spielt und dadurch die Messergebnisse entsprechend beeinträchtigt werden können.

Je höher die Winkelbeschleunigung bzw. die Änderung der Winkelbeschleunigung ist, desto schlechter wird ein Messpunkt bewertet, da bei einer hohen Beschleunigung bzw. einer starken Änderung der Beschleunigung aufgrund von Trägheitseffekten eine besonders große Gefahr der Messwertverfälschung besteht.

Auch eine höhere Winkelgeschwindigkeit führt zu einer schlechteren Bewertung der Messposition.

Vorzugsweise wird eine Messposition um so schlechter bewertet, je größer die Differenz der tangentialen Komponente der Auftreffposition zur tangentialen Komponente der Auftreffposition der vorhergehenden Messposition, bezogen auf den zeitlichen Abstand zur vorhergehenden Messposition, ist, da dies ein Hinweis auf eine zum Messzeitpunkt unterschiedliche Winkelgeschwindigkeit der beiden Wellen ist, was das Messergebnis dann stark beeinträchtigt.

Obschon dies in der Regel die Zuverlässigkeit der Wellenversatzermittlung erhöhen wird, ist es nicht grundsätzlich erforderlich, dass die Messpositionen einen vollen Umlauf der Wellen 10, 12 durchlaufen. Stattdessen kann es auch ausreichend sein, Messungen nur über einen Teilumlauf der Wellen 10, 12 vorzunehmen, da mittels der Kurvenanpassung sozusagen über den restlichen Drehwinkelbereich extrapoliert werden kann. Ein Beispiel dafür ist in der Fig. 6 gezeigt, wo nur ein Drehwinkelbereich von 100° durchschritten wurde.

Dabei kann auch nach Durchlaufen einer bestimmten Anzahl von Messpositionen, d.h. nach Durchlaufen eines bestimmten Winkelbereichs, eine Gesamtqualitätsbewertung der Daten der bis dahin durchlaufenen Messpositionen anhand der einzelnen Messpositionen durchgeführt werden. Hierbei kann auch eine Kurvenanpassung basierend auf den bis dahin durchlaufenen Messpositionen vorgenommen werden, und es kann eine Meldung bezüglich der ermittelten Gesamtqualität ausgegeben werden.

Beispielsweise kann die Gesamtqualitätsbewertung durch eine geeignete Mittelung der Einzelqualitätsbewertungen erfolgen. Dabei kann auch ein Schwellwert für die Gesamtqualität der Messung festgelegt werden, wobei dann je nachdem, ob die ermittelte Gesamtqualität diesen Schwellenwert bereits erreicht hat oder nicht, eine Meldung dahingehend ausgegeben werden, dass die Messung bereits beendet werden kann oder dass die Messung noch weitergeführt werden muss, um eine ausreichende Qualität zu erzielen. Wenn also beispielsweise bei einer Messung über 90° nur relativ schlechte Messpositionen vorliegen (z.B. aufgrund eines großen Kopplungsspiels und/oder einer zu ruckartigen Drehbewegung), wird die Auswerteeinheit 30 entscheiden, dass die Messung noch weitergeführt werden muss. Liegen dagegen bereits viele gute Messpunkte vor, so kann die Messung beendet werden.

Zusätzlich zu der Qualitätsbewertung der einzelnen Messpositionen kann in die Bewertung der Gesamtqualität auch die Verteilung der Messpositionen über den Drehwinkel und die Anzahl der Messpositionen eingehen. Dabei führt eine gleichmäßige Verteilung über die Drehwinkel sowie eine große Anzahl von Messpositionen zu einer höheren Qualitätsbewertung.

Auch die durchschnittliche Abweichung der einzelnen Messpunkte von der angepassten Kurve, d.h. Standardabweichung der Anpassung, kann bei der Ermittlung der Gesamtqualität berücksichtigt werden.

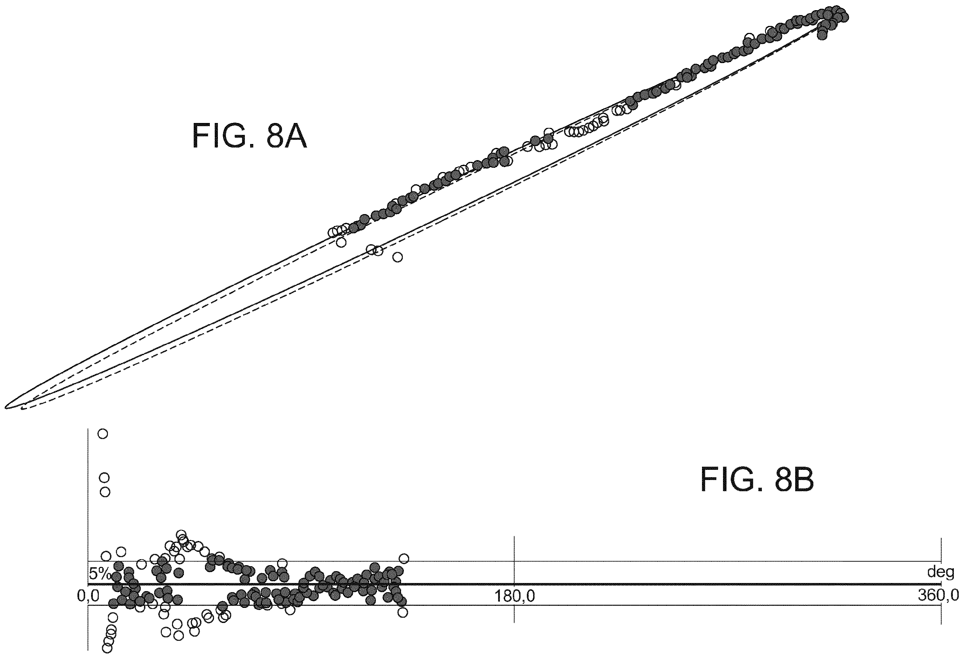

In Fig. 8A und 8B ist ein weiteres Beispiel für eine Messwerteauswertung mit fehlerbehafteten Messpunkten gezeigt, wobei bei der durchgezogenen Ellipse für die Kurvenanpassung nur Messwerte berücksichtigt wurden, deren Abweichung von einer an alle Messpunkte angepassten Ellipse maximal 5% betrug (schwarze Kreise), während die Messwerte mit einer höheren Abweichung (offene Kreise) bei der Anpassung nicht berücksichtigt wurden (die sich bei Anpassung an alle Messpunkte ergebende Ellipse ist in Fig. 8A gestrichelt dargestellt).

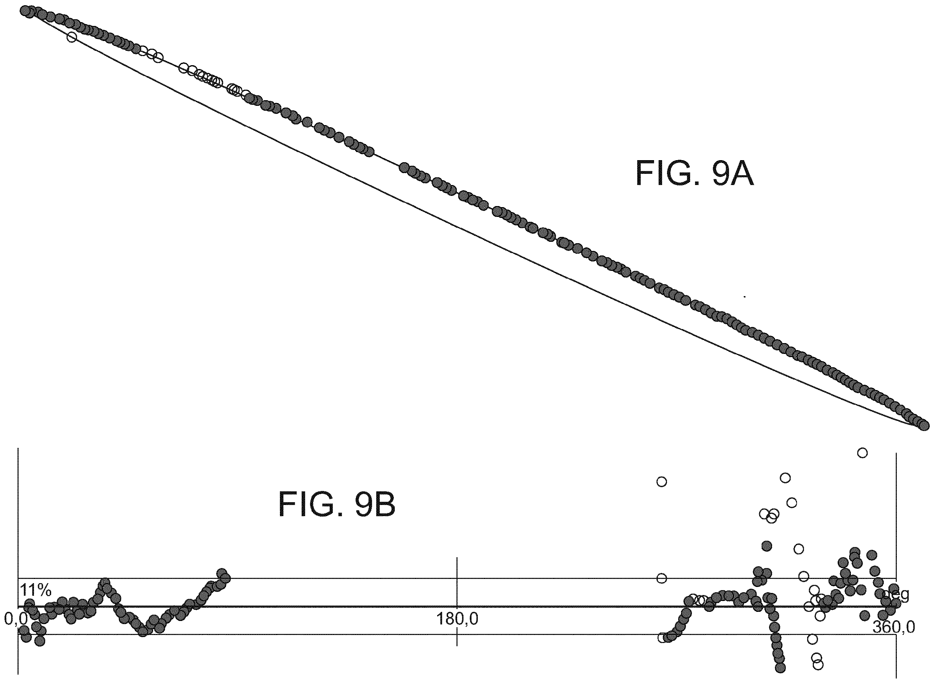

Ein ähnliches Beispiel ist in Fig. 9A und 9B gezeigt.

Wie bereits erwähnt, kann es sich bei dem Sensor 28 für den Drehwinkel um einen mindestens zweiachsigen Akzelerometersensor handeln. Um die Genauigkeit der Winkelerfassung zu erhöhen, können jedoch auch zwei solche Akzelerometersensoren vorgesehen sein.

Während bei dem bisher beschriebenen Ausführungsbeispiel nur die zweite Messeinheit mit einem Sensor zur Drehwinkelbestimmung versehen ist, können gemäß einer alternativen Ausführungsform auch beide Messeinheiten jeweils mit mindestens einem Drehwinkelsensor versehen sein (in Fig. 1 ist ein solcher zusätzlicher Drehwinkelsensor der ersten Messeinheit 16 bei 38 angedeutet). In diesem Fall muss eine Datenverbindung zwischen der ersten und zweiten Messeinheit 16, 18 vorgesehen sein, damit die Auswerteeinheit 30 Daten aller vorhandenen Drehwinkelsensoren berücksichtigen kann. Dabei wird dann die Differenz der mittels der ersten Messeinheit 16 ermittelten Drehwinkelposition und der mit den Daten der zweiten Messeinheit 18 ermittelten Drehwinkelposition ermittelt, um daraus das Kupplungsspiel zu ermitteln und dieses bei der Qualitätsbewertung der einzelnen Messpositionen und/oder bei der Gesamtqualitätsbewertung zu berücksichtigen.

Wie bereits erwähnt, kann die Ermittlung der Auftreffpositionen des Lichtstrahlbündels 22 jeweils mittels eines zweiachsigen optischen Detektors erfolgen. Alternativ ist es jedoch auch grundsätzlich möglich, die Detektionsfläche, d.h. die Fläche, auf welcher das Lichtstrahlbündel auftrifft, als Streufläche oder Mattscheibe auszubilden, wobei die Detektionsfläche dann von einer Kamera abgebildet wird, die im Falle einer Streufläche auf die der Einfallrichtung des Lichtstrahlbündels zugewandten Seite der Streufläche gerichtet ist und im Falle einer Mattscheibe auf die von der Einfallsrichtung des Lichtstrahlbündels abgewandte Seite der Mattscheibe gerichtet ist. Die Ermittlung der Auftreffposition erfolgt dann mittels Bildverarbeitung.

Grundsätzlich ist die vorgeschlagene Art der Messdatenvorverarbeitung mittels Qualitätsbewertung der einzelnen Messpositionen auch auf andere optische Wellenausrichtungsmessverfahren anwendbar.

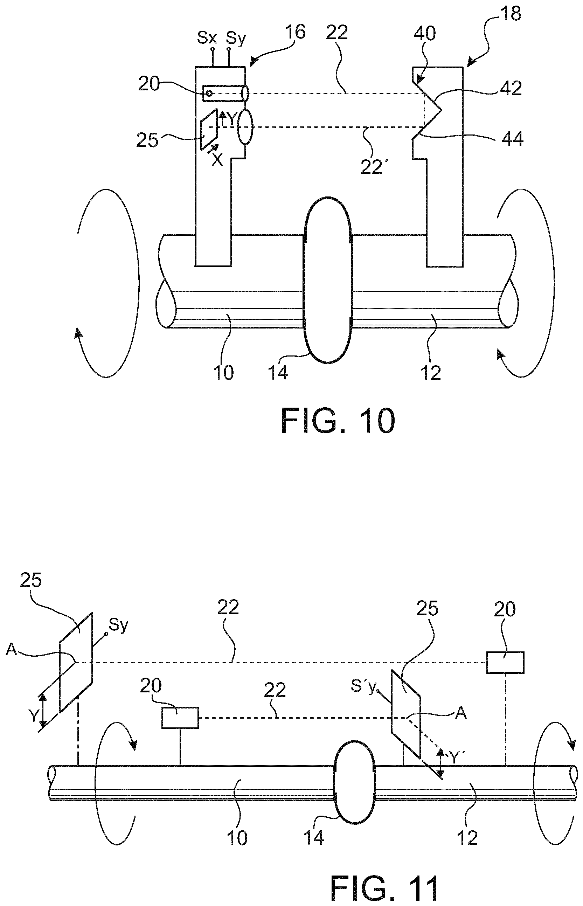

So ist beispielsweise in Fig. 10 ein Beispiel für ein Verfahren gezeigt, bei welchem die erste Messeinheit 18 sowohl die Lichtquelle 20 als auch einen zweiachsigen optischen Detektor 25 aufweist, während die zweite Messeinheit 18 eine Reflektoranordnung 40 aufweist, um den von der ersten Messeinheit 20 abgegebenen Lichtstrahl 22 auf die Detektorfläche 25 zu reflektieren. In diesem Fall werden für die Kurvenanpassung die radiale Komponente Y und die tangentiale Komponente X der Auftreffposition des reflektierten Lichtstrahlbündels 22' auf der Detektorfläche 25 herangezogen, wobei sich wiederum eine Ellipse ergibt.

Typischerweise weist die Reflektoranordnung 40 zwei unter einem rechten Winkel zueinander angeordnete reflektierende Flächen 42 und 44 auf, welche den einfallenden Strahl 22 jeweils nacheinander reflektieren, um ihn auf die Detektorfläche 25 zurückzulenken; die beiden Flächen 42, 44 sind dabei unter einem Winkel von etwa 45° zur Vertikalen angeordnet und verlaufen in tangentialer Richtung. Die Reflektoranordnung 40 kann dabei, wie in Fig. 10 gezeigt, nach Art eines Spiegels ausgebildet sein, oder sie kann als Prisma, insbesondere als Porro-Prisma oder als Tripel-Prisma, ausgebildet sein. Ein solches System ist beispielsweise in der DE 39 11 307 A1 beschrieben.

Ein weiteres alternatives Messverfahren ist in Fig. 11 gezeigt, wo jede der beiden Messeinheiten 16, 18 jeweils mit einer Lichtquelle 20 und einem zweiachsigen optischen Detektor 25 versehen sind. Die Lichtquelle 20 der ersten Messeinheit 16 ist dabei auf den Detektor 25 der zweiten Messeinheit 18 gerichtet, und die Lichtquelle 20 der zweiten Messeinheit 18 ist auf den Detektor 25 der ersten Messeinheit 16 gerichtet. Die Auswertung der Messpunkte erfolgt dabei in ähnlicher Weise wie bei dem Messprinzip gemäß den Fign. 1 bis 7, d.h. es wird die radiale Komponente des Auftreffpunkts auf einem der beiden Detektoren über der Differenz der radialen Komponenten der Auftreffpunkte auf beiden Detektoren aufgetragen; die so aufgetragenen Punkte werden dann mit einer Ellipse angepasst.

## Patentansprüche

1. Vorrichtung zum Ermitteln der Lage einer ersten Welle (10) und einer mittels einer Kupplung (14) mit der ersten Welle verbundenen zweiten Welle (12) zueinander, mit einer ersten Messeinheit zum Ansetzen an eine Umfangsfläche der ersten Welle, einer zweiten Messeinheit zum Ansetzen an eine Umfangsfläche der zweiten Welle, sowie einer Auswerteeinheit (30),
wobei mindestens eine der beiden Messeinheiten Mittel (20) zum Erzeugen mindestens eines Lichtstrahlbündels (22) aufweist und mindestens eine der beiden Messeinheiten Detektionsmittel (24, 25, 26) aufweist, um Daten betreffend die Auftreffposition des Lichtstrahlbündels auf mindestens einer Detektionsfläche (24, 25, 26) zu erfassen,
wobei mindestens eine der beiden Messeinheiten mit mindestens einem Sensor (28) zum Erfassen des Drehwinkels der Wellen versehen ist, bei dem es sich um ein mindestens zweiachsiges Akzelerometer oder um ein Gyroskop handelt,
wobei die Auswerteeinheit ausgebildet ist, um in mehreren Messpositionen aus den Sensor-Daten die jeweilige Drehwinkelposition, Winkelgeschwindigkeit und Winkelbeschleunigung der Wellen und aus den von den Detektionsmitteln gelieferten Daten die jeweilige Auftreffposition des Lichtstrahlbündels auf der mindestens einen Detektionsfläche zu ermitteln und um aus mindestens einem Teil der ermittelten Auftreffpositionen durch Kurvenanpassung den Versatz der Wellen zu ermitteln,
und wobei die Auswerteeinheit ferner ausgebildet ist, um für jede einzelene Messposition eine Qualitätsbewertung der zugehörigen Daten anhand mindestens der folgenden Kriterien vorzunehmen:
Winkelgeschwindigkeit und Winkelbeschleunigung,
Differenz der tangentialen Komponente der Auftreffposition(en) zur tangentialen Komponente der Auftreffposition(en) der vorhergehenden Messposition, bezogen auf den zeitlichen Abstand zur vorhergehenden Messposition,
Grad der Abweichung der Auftreffposition(en) von einer an mindestens einen Teil der ermittelten Auftreffpositionen angepassten Kurve,
und um die Daten einer Messposition von der Berücksichtigung bei der Ermittlung des Wellenversatzes auszuschließen oder nur mit verringerter Gewichtung zu berücksichtigen, falls die Qualitätsbewertung dieser Daten unterhalb eines Schwellwerts liegt.

2. Vorrichtung gemäß Anspruch 1, **dadurch gekennzeichnet, dass** der mindestens eine Sensor (28) ausgebildet ist, um für jede Messposition Schwingungen zu erfassen, wobei als weiteres Kriterium bei der Bewertung der Qualität der Daten die jeweilige Schwingungsintensität herangezogen wird, wobei eine höhere Schwingungsintensität zu einer schlechteren Bewertung führt.

3. Vorrichtung gemäß Anspruch 1 oder 2, **dadurch gekennzeichnet, dass** die Auswerteeinheit (30) ausgebildet ist, um als weiteres Kriterium bei der Bewertung der Qualität der Daten den zeitlichen Abstand der Messposition zu einem Referenzzeitpunkt der Drehbewegung heranzuziehen.

4. Vorrichtung gemäß Anspruch 3, **dadurch gekennzeichnet, dass** es sich bei dem Referenzzeitpunkt um den Beginn der Drehbewegung handelt, wobei die Auswerteeinheit derart ausgebildet ist, dass ein größerer Abstand zum Beginn der Drehbewegung zu einer besseren Bewertung führt.

5. Vorrichtung gemäß einem der vorhergehenden Ansprüche, **dadurch gekennzeichnet, dass** die Auswerteeinheit (30) ausgebildet ist, um als weiteres Kriterium bei der Bewertung der Qualität der Daten die zeitliche Änderung der Winkelbeschleunigung heranzuziehen.

6. Vorrichtung gemäß Anspruch 5, **dadurch gekennzeichnet, dass** die Auswerteeinheit derart ausgebildet ist, dass eine höhere zeitliche Änderung der Winkelbeschleunigung zu einer schlechteren Bewertung führt.

7. Vorrichtung gemäß einem der vorhergehenden Ansprüche, **dadurch gekennzeichnet, dass** die Auswerteeinheit derart ausgebildet ist, dass eine höhere Winkelgeschwindigkeit zu einer schlechteren Bewertung führt.

8. Vorrichtung gemäß einem der vorhergehenden Ansprüche, **dadurch gekennzeichnet, dass** die Auswerteeinheit derart ausgebildet ist, dass eine höhere Winkelbeschleunigung zu einer schlechteren Bewertung führt.

9. Vorrichtung gemäß einem der vorhergehenden Ansprüche, **dadurch gekennzeichnet, dass** die Auswerteeinheit derart ausgebildet ist, dass eine größere Differenz der tangentialen Komponente der Auftreffposition zur Auftreffposition der vorhergehenden Messposition, bezogen auf den zeitlichen Abstand zur vorhergehenden Messposition, zu einer schlechteren Bewertung führt.

10. Vorrichtung gemäß einem der vorhergehenden Ansprüche, **dadurch gekennzeichnet, dass** die Auswerteeinheit derart ausgebildet ist, dass Messpositionen in die Kurvenanpassung mit umso niedrigerer Gewichtung eingehen, je schlechter ihre Qualitätsbewertung ist.

11. Vorrichtung gemäß einem der vorhergehenden Ansprüche, **dadurch gekennzeichnet, dass** die Auswerteeinheit (30) ausgebildet ist, um nach Durchlaufen einer bestimmten Anzahl von Messposition eine Gesamt-Qualitätsbewertung der Daten der bis dahin durchlaufenen Messpositionen anhand der Qualitätsbewertung der einzelnen Messpositionen durchzuführen, um eine Kurvenanpassung basierend auf den bis dahin durchlaufenen Messpositionen vorzunehmen, und um eine Meldung bezüglich der ermittelten Gesamtqualität auszugeben.

12. Vorrichtung gemäß Anspruch 11, **dadurch gekennzeichnet, dass** die Meldung die Beendigung oder Weiterführung der Messung zum Inhalt hat, je nachdem, ob die ermittelte Gesamtqualität bereits einen Schwellwert erreicht hat oder nicht.

13. Vorrichtung gemäß Anspruch 11 oder 12, **dadurch gekennzeichnet, dass** die Auswerteeinheit (30) so ausgebildet ist, dass in die Ermittlung der Gesamtqualität die Drehwinkelverteilung der Messpositionen und die Anzahl der Messpositionen eingehen.

14. Vorrichtung gemäß einem der Ansprüche 11 bis 13, **dadurch gekennzeichnet, dass** in die Ermittlung der Gesamtqualität die durchnittliche Abweichung der Auftreffpositionen von der angepassten Kurve eingeht.

15. Vorrichtung gemäß einem der vorhergehenden Ansprüche, **dadurch gekennzeichnet, dass** mindestens eine der beiden Messeinheiten mit zwei der Akzelerometer-Sensoren versehen ist.

16. Vorrichtung gemäß einem der vorhergehenden Ansprüche, **dadurch gekennzeichnet, dass** es sich bei dem mindestens einen Sensor (30) um einen als MEMS-Baustein ausgebildeten Akzelerometer-Sensor handelt.

17. Vorrichtung gemäß einem der vorhergehenden Ansprüche, **dadurch gekennzeichnet, dass** jede der beiden Messeinheiten (16, 18) mit mindestens einem der Sensoren (28, 38) versehen ist, wobei die Auswerteeinheit (30) ausgebildet ist, um aus der Differenz der mit den Daten des mindestens einen Sensors der ersten Messeinheit ermittelten Drehwinkelposition und der mit den Daten des mindestens einen Sensors der zweiten Messeinheit ermittelten Drehwinkelposition das Kupplungsspiel zu ermitteln und bei der Qualitätsbewertung der einzelnen Messpositionen und/oder bei der Gesamt-Qualitätsbewertung zu berücksichtigen.

18. Vorrichtung gemäß einem der vorhergehenden Ansprüche, **dadurch gekennzeichnet, dass** die Detektionsmittel von mindestens einem zweiachsigen optischen Detektor (24, 25, 26) gebildet werden.

19. Vorrichtung gemäß einem der Ansprüche 1 bis 17, **dadurch gekennzeichnet, dass** die Detektionsfläche von einer Streufläche und die Detektionsmittel von einer Kamera, welche die der Lichtbündeleinfallseite zugewandte Seite der Streufläche abbildet, gebildet werden.

20. Vorrichtung gemäß einem der Ansprüche 1 bis 17, **dadurch gekennzeichnet, dass** die Detektionsfläche von einer Mattscheibe und die Detektionsmittel von einer Kamera, welche die der Lichtbündeleinfallseite abgewandte Seite der Mattscheibe abbildet, gebildet werden.

21. Vorrichtung gemäß einem der vorhergehenden Ansprüche, **dadurch gekennzeichnet, dass** die erste Messeinheit (16) mit den Mitteln (20) zum Erzeugen des mindestens eines Lichtstrahlbündels (22) versehen ist und die zweite Messeinheit (18) mit den Detektionsmitteln versehen ist, wobei die Detektionsmittel eine erste (24) und eine zweite Detektionsfläche (26) aufweisen, wobei die zweite Detektionsfläche optisch in axialer Richtung versetzt zu der ersten Detektionsfläche angeordnet ist und beide Detektionsflächen gleichzeitig von mindestens einem Teil (22', 22") des Lichtstrahlbündels getroffen werden.

22. Vorrichtung gemäß Anspruch 21, **dadurch gekennzeichnet, dass** der ersten Detektionsfläche (24) ein Strahlteiler (34) vorgeschaltet ist, um einen Teil (22") des Lichtstrahlbündels (22) auf die zweite Detektionsfläche (26) zu richten.

23. Vorrichtung gemäß Anspruch 21 oder 22, **dadurch gekennzeichnet, dass** bei der Kurvenanpassung lediglich die radiale Komponente der jeweiligen Auftreffposition auf jeder der beiden Detektionsflächen (24, 26) herangezogen wird.

24. Vorrichtung gemäß Anspruch 23, **dadurch gekennzeichnet, dass** für die Kurvenanpassung die radiale Komponente der Auftreffposition auf der ersten Detektionsfläche (24) und die Differenz der radialen Komponenten der Auftreffpositionen auf der ersten und der zweiten Detektionsfläche (26) herangezogen werden.

25. Vorrichtung gemäß einem der Ansprüche 1 bis 20, **dadurch gekennzeichnet, dass** die erste Messeinheit (16) mit den Mitteln (20) zum Erzeugen des mindestens eines Lichtstrahlbündels (22) und den Detektionsmitteln (25) versehen ist, wobei die zweite Messeinheit (18) eine Reflektoranordnung (40) aufweist, welche der ersten Messeinheit zugewandt ist, wenn die Messeinheiten an die jeweilige Welle (10, 12) angesetzt sind, um das Lichtstrahlbündel auf die Detektionsfläche zu reflektieren.

26. Vorrichtung gemäß Anspruch 25, **dadurch gekennzeichnet, dass** für die Kurvenanpassung die radiale Komponente und die tangentiale Komponente der Auftreffposition auf der Detektionsfläche (25) herangezogen werden.

27. Vorrichtung gemäß Anspruch 25 oder 26, **dadurch gekennzeichnet, dass** die Reflektoranordnung (40) als Prisma, insbesondere als Porro-Prisma oder als Tripel-Prisma, ausgebildet ist.

28. Vorrichtung gemäß einem der Ansprüche 21 bis 27, **dadurch gekennzeichnet, dass** es sich bei der Kurve um eine Ellipse handelt.

29. Verfahren zum Ermitteln der Lage einer ersten Welle (10) und einer mittels einer Kupplung (14) mit der ersten Welle verbundenen zweiten Welle (12) zueinander, wobei
eine erste Messeinheit (16) an eine Umfangsfläche der ersten Welle und eine zweite Messeinheit (18) an eine Umfangsfläche der zweiten Welle angesetzt wird,
mittels mindestens einer der beiden Messeinheiten mindestens ein Lichtstrahlbündel (22) erzeugt wird und auf mindestens eine Detektionsfläche (24, 25, 26) an mindestens einer der beiden Messeinheiten gerichtet wird,
um in mehreren Messpositionen Daten betreffend die Auftreffposition des Lichtstrahlbündels auf der mindestens einen Detektionsfläche erfasst werden und mittels mindestens einem Sensor (28), bei dem es sich um ein mindestens zweiachsiges Akzelerometer oder um ein Gyroskop handelt, an mindestens einer der beiden Messeinheiten Daten bzgl. des Drehwinkels der Wellen erfasst werden,
wobei aus den Sensor-Daten die jeweilige Drehwinkelposition, Winkelgeschwindigkeit und Winkelbeschleunigung der Wellen und aus den Auftreffpositions-Daten die jeweilige Auftreffposition des Lichtstrahlbündels auf der mindestens einen Detektionsfläche ermitteln werden und aus mindestens einem Teil der ermittelten Auftreffpositionen durch Kurvenanpassung der Versatz der Wellen ermittelt wird,
wobei für jede einzelene Messposition eine Qualitätsbewertung der zugehörigen Daten anhand mindestens der folgenden Kriterien vorgenommen wird:
Winkelgeschwindigkeit und Winkelbeschleunigung,
Differenz der tangentialen Komponente der Auftreffposition zur Auftreffposition der vorhergehenden Messposition, bezogen auf den zeitlichen Abstand zur vorhergehenden Messposition,
Grad der Abweichung der Auftreffposition(en) von einer an mindestens einen Teil der ermittelten Auftreffpositionen angepassten Kurve,
und die Daten einer Messposition von der Berücksichtigung bei der Ermittlung des Wellenversatzes ausgeschlossen oder nur mit verringerter Gewichtung zu berücksichtigen werden, falls die Qualitätsbewertung dieser Daten unterhalb eines Schwellwerts liegt.

## Claims

1. Apparatus for ascertaining the position of a first shaft (10) and a second shaft (12) with respect to one another, said second shaft being connected to the first shaft by means of a coupling (14), said apparatus comprising a first measuring unit to be placed on a circumferential area of the first shaft, a second measuring unit to be placed on a circumferential area of the second shaft, and an evaluation unit (30),
wherein at least one of the two measuring units has means (20) for producing at least one light beam (22) and at least one of the two measuring units has detection means (24, 25, 26) for capturing data in relation to the incidence location of the light beam on at least one detection area (24, 25, 26),
wherein at least one of the two measuring units is provided with at least one sensor (28) for capturing the rotational angle of the shaft, said at least one sensor being an at least two-axis accelerometer or a gyroscope,
wherein the evaluation unit is embodied to ascertain, at a plurality of measurement locations, the respective angular position, angular speed and angular acceleration of the shafts from the sensor data and the respective incidence location of the light beam on the at least one detection area from the data supplied by the detection means and ascertain the offset of the shafts by curve fitting from at least some of the ascertained incidence locations,
and wherein the evaluation unit is further embodied to undertake a quality assessment of the associated data for each individual measurement location on the basis of at least the following criteria:
angular speed and angular acceleration,
difference of the tangential component of the incidence location(s) with respect to the tangential component of the incidence location(s) of the preceding measurement location, in relation to the temporal distance from the preceding measurement location,
degree of deviation of the incidence location(s) from a curve fitted to at least some of the ascertained incidence locations,
and to exclude the data of a measurement location from being taken into account when ascertaining the shaft offset or to only take account of said data with reduced weighting if the quality assessment of these data lies below a threshold.

2. Apparatus according to Claim 1, **characterized in that** the at least one sensor (28) is embodied to capture vibrations for each measurement location, wherein the respective vibration intensity is used as a further criterion when assessing the quality of the data, with a higher vibration intensity leading to a worse assessment.

3. Apparatus according to Claim 1 or 2, **characterized in that** the evaluation unit (30) is embodied to use the temporal distance of the measurement location from a reference time of the rotational movement as a further criterion when assessing the quality of the data.

4. Apparatus according to Claim 3, **characterized in that** the reference time is the start of the rotational movement, wherein the evaluation unit is embodied in such as way that a greater distance from the start of the rotational movement leads to a better assessment.

5. Apparatus according to any one of the preceding claims, **characterized in that** the evaluation unit (30) is embodied to use a temporal change of the angular acceleration as a further criterion when assessing the quality of the data.

6. Apparatus according to Claim 5, **characterized in that** the evaluation unit is embodied in such a way that a higher temporal change of the angular acceleration leads to a worse assessment.

7. Apparatus according to any one of the preceding claims, **characterized in that** the evaluation unit is embodied in such a way that a higher angular speed leads to a worse assessment.

8. Apparatus according to any one of the preceding claims, **characterized in that** the evaluation unit is embodied in such a way that a higher angular acceleration leads to a worse assessment.

9. Apparatus according to any one of the preceding claims, **characterized in that** the evaluation unit is embodied in such a way that a greater difference of the tangential component of the incidence location to the incidence location of the preceding measurement position, in relation to the temporal distance from the previous measurement position, leads to a worse assessment.

10. Apparatus according to any one of the preceding claims, **characterized in that** the evaluation unit is embodied in such a way that, as the quality assessment of the measurement locations becomes worse, said measurement locations are incorporated in the curve fitting with a lower weighting.

11. Apparatus according to any one of the preceding claims, **characterized in that**, after running through a certain number of measurement locations, the evaluation unit (30) is embodied to carry out an assessment of the overall quality of the data of the measurement locations run through up until that point on the basis of the quality assessment of the individual measurement locations in order to undertake curve fitting on the basis of the measurement locations run through up until that point and in order to output a statement in respect of the ascertained overall quality.

12. Apparatus according to Claim 11, **characterized in that** the statement has as content the termination or continuation of the measurement, depending on whether or not the ascertained overall quality has already reached a threshold.

13. Apparatus according to Claim 11 or 12, **characterized in that** the evaluation unit (30) is embodied in such a way that the angular position distribution of the measurement locations and the number of measurement locations are included in the ascertainment of the overall quality.

14. Apparatus according to any one of Claims 11 to 13, **characterized in that** the average deviation of the incidence locations from the fitted curve are included in the ascertainment of the overall quality.

15. Apparatus according to any one of the preceding claims, **characterized in that** at least one of the two measuring units is provided with two of the accelerometer sensors.

16. Apparatus according to any one of the preceding claims, **characterized in that** the at least one sensor (30) is an accelerometer sensor that is embodied as a MEMS component.

17. Apparatus according to any one of the preceding claims, **characterized in that** each of the two measuring units (16, 18) is provided with at least one of the sensors (28, 38), wherein the evaluation unit (30) is embodied to ascertain the coupling play from the difference of the angular position ascertained using the data of the at least one sensor of the first measuring unit and the angular position ascertained using the data of the at least one sensor of the second measuring unit, and take account of said coupling play in the quality assessment of the individual measurement locations and/or in the overall quality assessment.

18. Apparatus according to any one of the preceding claims, **characterized in that** the detection means are formed by at least one two-axis optical detector (24, 25, 26).

19. Apparatus according to any one of Claims 1 to 17, **characterized in that** the detection area is formed by a scattering area and the detection means are formed by a camera which images the side of the scattering area facing the light beam side of incidence.

20. Apparatus according to any one of Claims 1 to 17, **characterized in that** the detection area is formed by a ground glass screen and the detection means are formed by a camera which images the side of the ground glass screen facing away from the light beam side of incidence.

21. Apparatus according to any one of the preceding claims, **characterized in that** the first measuring unit (16) is provided with the means (20) for producing the at least one light beam (22) and the second measuring unit (18) is provided with the detection means, wherein the detection means have a first (24) and a second detection area (26), wherein the second detection area is arranged optically offset in the axial direction from the first detection area and both detection areas are struck simultaneously by at least part (22', 22") of the light beam.

22. Apparatus according to Claim 21, **characterized in that** a beam splitter (34) is disposed upstream of the first detection area (24) in order to direct a part (22") of the light beam (22) onto the second detection area (26).

23. Apparatus according to Claim 21 or 22, **characterized in that** only the radial component of the respective incidence location on each of the two detection areas (24, 26) is used in the curve fitting.

24. Apparatus according to Claim 23, **characterized in that** the radial component of the incidence location of the first detection area (24) and the difference of the radial components of the incidence locations on the first and the second detection area (26) are used for the curve fitting.

25. Apparatus according to any one of Claims 1 to 20, **characterized in that** the first measuring unit (16) is provided with the means (20) for producing the at least one light beam (22) and the detection means (25), wherein the second measuring unit (18) has a reflector arrangement (40) that faces the first measuring unit when the measuring units are placed on the respective shaft (10, 12) in order to reflect the light beam onto the detection area.

26. Apparatus according to Claim 25, **characterized in that** the radial component and the tangential component of the incidence location on the detection area (25) are used for the curve fitting.

27. Apparatus according to Claim 25 or 26, **characterized in that** the reflector arrangement (40) is embodied as a prism, in particular as a Porro prism or as a triple prism.

28. Apparatus according to any one of Claims 21 to 27, **characterized in that** the curve is an ellipse.

29. Method for ascertaining the position of a first shaft (10) and a second shaft (12) with respect to one another, said second shaft being connected to the first shaft by means of a coupling (14), wherein
a first measuring unit (16) is placed on the circumferential area of the first shaft and a second measuring unit (18) is placed on a circumferential area of the second shaft,
at least one light beam (22) is produced by means of at least one of the two measuring units and directed on at least one detection area (24, 25, 26) on at least one of the two measuring units
in order to data relating to the incidence location of the light beam on the at least one detection area are captured at a plurality of measurement locations and data in respect of the rotational angle of the shaft are captured by means of at least one sensor (28) on at least one of the two measuring units, said at least one sensor being an at least two-axis accelerometer or a gyroscope,
wherein the respective angular position, angular speed and angular acceleration of the shafts are ascertained from the sensor data and the respective incidence location of the light beam on the at least one detection area is ascertained from the incidence location data, and the offset of the shafts is ascertained from at least some of the ascertained incidence locations by curve fitting,
wherein a quality assessment of the associated data is undertaken for each individual measurement location on the basis of at least the following criteria:
angular speed and angular acceleration,
difference of the tangential component of the incidence location with respect to the incidence location of the preceding measurement location, in relation to the temporal distance from the preceding measurement location,
degree of deviation of the incidence location(s) from a curve fitted to at least some of the ascertained incidence locations,
and the data of the measurement location are excluded from being taken into account when ascertaining the shaft offset or said data are only taken into account with reduced weighting if the quality assessment of these data lie below a threshold.

## Revendications

1. Dispositif pour déterminer la position, l'un par rapport à l'autre, d'un premier arbre (10) et d'un deuxième arbre (12) relié au premier arbre au moyen d'un accouplement (14), comprenant une première unité de mesure destinée à être appliquée contre une surface périphérique du premier arbre, une deuxième unité de mesure destinée à être appliquée contre une surface périphérique du deuxième arbre, ainsi qu'une unité d'interprétation (30),
au moins l'une des deux unités de mesure possédant des moyens (20) destinés à générer au moins un faisceau de rayons lumineux (22) et au moins l'une des deux unités de mesure possédant des moyens de détection (24, 25, 26) afin d'acquérir des données concernant la position d'incidence du faisceau de rayons lumineux sur l'au moins une surface de détection (24, 25, 26),
au moins l'une des deux unités de mesure étant pourvue d'au moins un capteur (28) destiné à détecter l'angle de rotation des arbres, lequel est un accéléromètre à au moins deux axes ou un gyroscope,
l'unité d'interprétation étant configurée pour déterminer dans plusieurs positions de mesure, à partir des données de capteur, la position angulaire de rotation, la vitesse angulaire et l'accélération angulaire respectives des arbres et, à partir des données délivrées par les moyens de détection, la position d'incidence respective du faisceau de rayons lumineux sur l'au moins une surface de détection et pour déterminer le désalignement des arbres par une adaptation des courbes à partir d'au moins une partie des positions d'incidence déterminées,
et l'unité d'interprétation étant en outre configurée pour effectuer, pour chaque position de mesure individuelle, une évaluation de la qualité des données associées à l'aide d'au moins les critères suivants :
vitesse angulaire et accélération angulaire,
différence de la composante tangentielle de la ou des positions d'incidence par rapport à la composante tangentielle de la ou des positions d'incidence de la position de mesure précédente, rapportée à l'écart dans le temps par rapport à la position de mesure précédente,
degré de l'écart de la ou des positions d'incidence par rapport à une courbe adaptée à au moins une partie des positions d'incidence déterminées,
et pour exclure les données d'une position de mesure de la prise en compte lors de la détermination du désalignement des arbres ou de n'en tenir compte qu'avec une faible pondération dans le cas où l'évaluation de la qualité de ces données est inférieure à une valeur de seuil.

2. Dispositif selon la revendication 1, **caractérisé en ce que** l'au moins un capteur (28) est configuré pour détecter des oscillations pour chaque position de mesure, l'intensité respective des oscillations étant utilisée en tant que critère supplémentaire lors de l'évaluation de la qualité des données, une intensité d'oscillations plus élevée se traduisant par une évaluation plus mauvaise.

3. Dispositif selon la revendication 1 ou 2, **caractérisé en ce que** l'unité d'interprétation (30) est configurée pour utiliser comme critère supplémentaire lors de l'évaluation de la qualité des données l'écart dans le temps des positions de mesure par rapport à un instant de référence du mouvement de rotation.

4. Dispositif selon la revendication 3, **caractérisé en ce que** l'instant de référence correspond au début du mouvement de rotation, l'unité d'interprétation étant configurée de telle sorte qu'un écart plus important par rapport au début du mouvement de rotation se traduit par une meilleure évaluation.

5. Dispositif selon l'une des revendications précédentes, **caractérisé en ce que** l'unité d'interprétation (30) est configurée pour utiliser la variation dans le temps de l'accélération angulaire comme critère supplémentaire lors de l'évaluation de la qualité des données.

6. Dispositif selon la revendication 5, **caractérisé en ce que** l'unité d'interprétation est configurée de telle sorte qu'une variation dans le temps plus importante de l'accélération angulaire se traduit par une évaluation plus mauvaise.

7. Dispositif selon l'une des revendications précédentes, **caractérisé en ce que** l'unité d'interprétation est configurée de telle sorte qu'une vitesse angulaire plus importante se traduit par une évaluation plus mauvaise.

8. Dispositif selon l'une des revendications précédentes, **caractérisé en ce que** l'unité d'interprétation est configurée de telle sorte qu'une accélération angulaire plus importante se traduit par une évaluation plus mauvaise.

9. Dispositif selon l'une des revendications précédentes, **caractérisé en ce que** l'unité d'interprétation est configurée de telle sorte qu'une différence plus importante entre la composante tangentielle de la position d'incidence par rapport à la position d'incidence de la position de mesure précédente, rapportée à l'écart dans le temps par rapport à la position de mesure précédente, se traduit par une évaluation plus mauvaise.

10. Dispositif selon l'une des revendications précédentes, **caractérisé en ce que** l'unité d'interprétation est configurée de telle sorte que les positions de mesure interviennent dans l'adaptation des courbes avec une pondération d'autant plus faible que l'évaluation de leur qualité est mauvaise.

11. Dispositif selon l'une des revendications précédentes, **caractérisé en ce que** l'unité d'interprétation (30) est configurée pour, après le balayage d'un nombre donné de positions de mesure, effectuer une évaluation globale de la qualité des données des positions de mesure qui ont été balayées jusqu'à ce moment à l'aide de l'évaluation de la qualité des positions de mesure individuelles, pour réaliser une adaptation des courbes sur la base des positions de mesure qui ont été balayées jusqu'à ce moment et pour délivrer un message concernant la qualité globale déterminée.

12. Dispositif selon la revendication 11, **caractérisé en ce que** le message contient la fin ou la poursuite de la mesure, suivant que la qualité globale déterminée ait déjà atteint ou non une valeur de seuil.

13. Dispositif selon la revendication 11 ou 12, **caractérisé en ce que** l'unité d'interprétation (30) est configurée de telle sorte que la distribution des angles de rotation des positions de mesure et le nombre de positions de mesure interviennent dans la détermination de la qualité globale.

14. Dispositif selon l'une des revendications 11 à 13, **caractérisé en ce que** l'écart moyen des positions d'incidence par rapport à la courbe adaptée intervient dans la détermination de la qualité globale.

15. Dispositif selon l'une des revendications précédentes, **caractérisé en ce qu'**au moins l'une des deux unités de mesure est équipée de deux des capteurs accéléromètres.

16. Dispositif selon l'une des revendications précédentes, **caractérisé en ce que** l'au moins un capteur (30) est un capteur accéléromètre réalisé sous la forme d'un composant MEMS.

17. Dispositif selon l'une des revendications précédentes, **caractérisé en ce que** chacune des deux unités de mesure (16, 18) est pourvue de l'au moins un des capteurs (28, 38), l'unité d'interprétation (30) étant configurée pour déterminer le jeu d'accouplement à partir de la différence entre la position d'angle de rotation déterminée avec les données de l'au moins un capteur de la première unité de mesure et la position d'angle de rotation déterminée avec les données de l'au moins un capteur de la deuxième unité de mesure et pour en tenir compte lors de l'évaluation de la qualité des positions de mesure individuelles et/ou lors de l'évaluation de la qualité globale.

18. Dispositif selon l'une des revendications précédentes, **caractérisé en ce que** les moyens de détection sont formés par au moins un détecteur optique (24, 25, 26) à deux axes.

19. Dispositif selon l'une des revendications 1 à 17, **caractérisé en ce que** la surface de détection est formée par une surface de diffusion et les moyens de détection sont formés par une caméra qui représente le côté de la surface de diffusion qui fait face au côté d'incidence du faisceau de rayons lumineux.

20. Dispositif selon l'une des revendications 1 à 17, **caractérisé en ce que** la surface de détection est formée par une vitre mate et les moyens de détection sont formés par une caméra qui représente le côté de la vitre mate à l'opposé du côté d'incidence du faisceau de rayons lumineux.

21. Dispositif selon l'une des revendications précédentes, **caractérisé en ce que** la première unité de mesure (16) est pourvue des moyens (20) destinés à générer l'au moins un faisceau de rayons lumineux (22) et la deuxième unité de mesure (18) est pourvue des moyens de détection, les moyens de détection possédant une première (24) et une deuxième surface de détection (26), la deuxième surface de détection étant disposée de manière décalée optiquement dans la direction axiale par rapport à la première surface de détection et les deux surfaces de détection étant frappées simultanément par au moins une partie (22', 22" du faisceau de rayons lumineux.

22. Dispositif selon la revendication 21, **caractérisé en ce qu'**un diviseur de faisceaux (34) est monté en amont de la première surface de détection (24) afin de diriger une partie (22'') du faisceau de rayons lumineux (22) sur la deuxième surface de détection (26).

23. Dispositif selon la revendication 21 ou 22, **caractérisé en ce que** lors de l'adaptation des courbes, seule est utilisée la composante radiale de la position d'incidence respective sur chacune des deux surfaces de détection (24, 26).

24. Dispositif selon la revendication 23, **caractérisé en ce que** la composante radiale de la position d'incidence sur la première surface de détection (24) et la différence des composantes radiales des positions d'incidence sur la première et la deuxième surface de détection (26) sont utilisées pour l'adaptation des courbes.

25. Dispositif selon l'une des revendications 1 à 20, **caractérisé en ce que** la première unité de mesure (16) est pourvue des moyens (20) destinés à générer l'au moins un faisceau de rayons lumineux (22) et des moyens de détection (25), la deuxième unité de mesure (18) possédant un arrangement réflecteur (40) qui fait face à la première unité de mesure, lorsque les unités de mesure sont appliquées contre l'arbre (10, 12) respectif, afin de réfléchir le faisceau de rayons lumineux sur la surface de détection.

26. Dispositif selon la revendication 25, **caractérisé en ce que** la composante radiale et la composante tangentielle de la position d'incidence sur la surface de détection (25) sont utilisées pour l'adaptation des courbes.

27. Dispositif selon la revendication 25 ou 26, **caractérisé en ce que** l'arrangement réflecteur (40) est réalisé sous la forme d'un prisme, notamment d'un prisme de Porro ou d'un triple prisme.

28. Dispositif selon l'une des revendications 21 à 27, **caractérisé en ce que** la courbe est une ellipse.

29. Procédé pour déterminer la position, l'un par rapport à l'autre, d'un premier arbre (10) et d'un deuxième arbre (12) relié au premier arbre au moyen d'un accouplement (14),
une première unité de mesure (16) étant appliquée contre une surface périphérique du premier arbre et une deuxième unité de mesure (18) contre une surface périphérique du deuxième arbre,
au moins un faisceau de rayons lumineux (22) étant généré au moyen d'au moins l'une des deux unités de mesure et étant dirigé sur au moins une surface de détection (24, 25, 26) au niveau d'au moins l'une des deux unités de mesure,
en vue de, dans plusieurs positions de mesure, des données concernant la position d'incidence du faisceau de rayons lumineux sur l'au moins une surface de détection étant acquises et au moyen d'au moins un capteur (28), lequel est un accéléromètre à au moins deux axes ou un gyroscope, des données concernant l'angle de rotation des arbres étant acquises au niveau d'au moins l'une des deux unités de mesure,
la position angulaire de rotation, la vitesse angulaire et l'accélération angulaire respectives des arbres étant déterminées à partir des données de capteur et, à partir des données de position d'incidence, la position d'incidence respective du faisceau de rayons lumineux sur l'au moins une surface de détection étant déterminée et, à partir d'au moins une partie des positions d'incidence déterminées, le désalignement des arbres étant déterminé par une adaptation des courbes,
pour chaque position de mesure individuelle, une évaluation de la qualité des données associées étant effectuée à l'aide d'au moins les critères suivants :
vitesse angulaire et accélération angulaire,
différence de la composante tangentielle de la position d'incidence par rapport à la position d'incidence de la position de mesure précédente, rapportée à l'écart dans le temps par rapport à la position de mesure précédente,
degré de l'écart de la ou des positions d'incidence par rapport à une courbe adaptée à au moins une partie des positions d'incidence déterminées,
et les données d'une position de mesure étant exclues de la prise en compte lors de la détermination du désalignement des arbres ou n'étant prises en compte qu'avec une faible pondération dans le cas où l'évaluation de la qualité de ces données est inférieure à une valeur de seuil.
